# EUROPÄISCHE PATENTSCHRIFT

(11) **EP 2 180 433 B1**
(45) Veröffentlichungstag und Bekanntmachung des Hinweises auf die Patenterteilung: **05.04.2017**
(21) Anmeldenummer: 09013348.9
(22) Anmeldetag: 22.10.2009
(51) Int. Cl.: G06K 19/077, G06K 19/073, B32B 37/18

(54) **Verfahren zur Herstellung eines tragbaren Datenträgers und damit hergestellter tragbarer Datenträger**
Method for producing a portable data carrier and the portable data carrier produced therefrom
Procédé de fabrication d'un support de données portatif et le support de données portatif produit par la méthode

(30) Priorität: 27.10.2008 DE 102008053368
(43) Veröffentlichungstag der Anmeldung: 28.04.2010
(73) Patentinhaber: Giesecke & Devrient GmbH, 81677 München (DE)
(72) Erfinder: Stegmüller, Michael, 80809 München (DE)

(56) Entgegenhaltungen:
- US-A1- 2006 124 350
- US-A1- 2008 217 413

## Beschreibung

Die Erfindung betrifft ein Verfahren zur Herstellung eines tragbaren Datenträgers, der zumindest eine elektronische Schaltung, ein mechanisch empfindliches Bauteil und einen die elektronische Schaltung und das Bauteil aufnehmenden Körper aufweist, wobei der Körper durch Heißlamination von Kunststoff teilen hergestellt wird. Die Erfindung betrifft ferner einen tragbaren Datenträger zur Speicherung und/ oder Verarbeitung von Daten, mit einer elektronischen Schaltung, einem Bauteil, insbesondere einer von außerhalb des tragbaren Datenträgers betätigbaren Schalteinrichtung, und einen die elektronische Schaltung und die Schalteinrichtung aufnehmenden Körper, der durch heißlaminierte Kunststoffteile gebildet wird.

Im Rahmen des Herstellungsprozesses für einen tragbaren Datenträger besteht eine übliche Vorgehensweise darin, eine elektronische Schaltung ganz oder teilweise mit einem Material, insbesondere mit einem Kunststoffmaterial, zu umgeben. Bei der elektronischen Schaltung handelt es sich in der Regel um einen integrierten Schaltkreis, insbesondere um einen Mikrocontroller. Je nach dem Anwendungsgebiet, für das die tragbaren Datenträger vorgesehen sind, werden die tragbaren Datenträger jeweils zusätzlich zur elektronischen Schaltung mit weiteren Komponenten ausgestattet, insbesondere auch mit einer oder mehreren Schalteinrichtungen. Aufgrund ihrer flachen Bauweise und der niedrigen Herstellungskosten eignen sich für diesen Zweck Folientaster oder Schnappscheiben besonders gut.

Als problematisch hat sich erwiesen, dass derartige Schalteinrichtungen beim Laminieren so nachhaltig in den Kunststoffkartenkörper eingebettet werden, dass die charakteristische taktile Rückmeldung beim Betätigen beeinträchtigt wird. Die Heißlamination wird aber gerade bei der Herstellung von tragbaren Datenträgern, insbesondere von Chipkarten, häufig eingesetzt, da sich damit eine untrennbare Verbindung der bei der Herstellung verwendeten Folien erzielen lässt.

Zur Vermeidung einer Funktionsbeeinträchtigung aufgrund einer Heißlamination ist es aus der DE 10 2005 020 092 A1 bekannt, einen in Gestalt einer Schnappscheibe ausgebildeten Taster in eine in dem Kartenkörper vorbereitete Kavität einzusetzen. Dabei wird die Kavität nach Herstellung des Kartenkörpers in diesen eingearbeitet. Eine konstruktiv ähnliche Variante ist aus der WO 2005/062245 aus den Fig. 7 bis 9 entnehmbar.

Ferner ist es aus der FR 2 757 313 bekannt, einen integrierten Baustein mit vorgegebenen Kapseln aus thermoplastischem Material zu umgeben.

Des Weiteren offenbart die US 2008/0217413 A1 eine RFID-Karte mit einem Inlay, wobei das Inlay mit einer Antenne versehen ist. Auf der Karte ist ein druckempfindlicher Schalter mit einer Elektrodenstruktur vorgesehen, wobei der Widerstand des druckempfindlichen Schalters gemäß dem angelegten Druck an dem Schalter variiert. Der druckempfindliche Schalter ist mit einem Schutzdamm in der Umgebung um den Schalter versehen, um eine Barriere gegen seitlichen Druck, der an den Schalter angelegt wird, vorzusehen.

Es ist Aufgabe der vorliegenden Erfindung, ein Verfahren zur Herstellung eines tragbaren Datenträgers anzugeben, bei welchem das Herstellungsverfahren optimiert gestaltbar ist und bei dem auch der Einsatz von Material erweichenden Fertigungstechniken zur Herstellung des tragbaren Datenträgers ermöglicht ist. Ferner soll ein tragbarer Datenträger angegeben werden. Diese Aufgaben werden gelöst durch ein Verfahren mit den Merkmalen des Patentanspruches 1 sowie einen tragbaren Datenträger mit den Merkmalen des Patentanspruches 8 . Vorteilhafte Ausgestaltungen ergeben sich aus den abhängigen Patentansprüchen.

Das erfindungsgemäße Verfahren bezieht sich auf die Herstellung eines tragbaren Datenträgers, der zumindest eine elektronische Schaltung, ein mechanisch empfindliches Bauteil und einen die elektronische Schaltung und das Bauteil aufnehmenden Körper aufweist, wobei der Körper durch Lamination von Kunststoffteilen hergestellt wird. Erfindungsgemäß ist vorgesehen, dass das Bauteil auf einen Boden des Körpers aufgebracht und von einem einen Schutzraum für das Bauteil ausbildenden Begrenzungsmittel umgeben ist, wobei das Begrenzungsmittel während der nachfolgenden Lamination der Kunststoffteile das Eindringen von Klebstoff oder einem anderen fließfähigen Material in den Schutzraum verhindert.

Durch das erfindungsgemäße Verfahren können laminierbedingte Beeinträchtigungen vermieden werden. Insbesondere ist es möglich, dass als Bauteil eine von außerhalb des tragbaren Datenträgers betätigbare Schalteinrichtung in dem Schutzraum angeordnet wird.

Die von außerhalb des tragbaren Datenträgers betätigbare Schalteinrichtung kann als mechanischer Taster oder als elastisch deformierbares Element ausgebildet sein. Insbesondere kann das Bauteil in Gestalt einer Schnappscheibe geschützt in den Kartenkörper integriert werden. Schnappscheiben schließen bekanntermaßen durch Druckaktivierung einen elektronischen Schaltkreis und lösen eine entsprechende Funktionsanwendung aus. Während eine ungeschützte Schnappscheibe im Kartenkörper keine bzw. fast keine taktile Rückmeldung gibt, kann durch die Bereitstellung eines erfindungsgemäßen Schutzraumes die taktile Rückmeldung einer derartigen Schnappscheibe vollständig erhalten bleiben. Die laminierbedingte Beeinträchtigung ohne besondere Schutzmaßnahmen ist darauf zurückzuführen, dass die einzelnen Folienschichten des Körpers bei der Laminierung um die Schnappscheibe zusammenfließen und somit die Bewegungsfreiheit der Schnappscheibe verringern. Durch den in dem Kartenkörper integrierten Schutzraum für die Schnappscheibe kann dies verhindert werden, so dass die Taktilität der Schnappscheibe erhalten bleibt.

In einer ersten Ausgestaltungsvariante wird das Begrenzungsmittel durch einen das Bauteil umlaufenden und zu dem Bauteil beabstandeten Klebstoffwulst ausgebildet. Die Verwendung eines Klebstoffs ist vorteilhaft, da dieser auf einfache Weise verarbeitbar ist. Dabei ist vorgesehen, dass der Klebstoffwulst derart auf den Boden aufgebracht wird, dass dieser unterbrechungsfrei und geschlossen das Bauteil umläuft. Auf diese Weise ist sichergestellt, dass kein Klebstoff oder anderes fließfähiges Material während des Laminierens in das Innere des Schutzraums gelangen kann.

Erfindungsgemäß wird der Klebstoffwulst derart auf den Boden aufgebracht, dass dieser über das von dem Boden abgewandte Ende des Bodens hinausragt. Dabei wird eine Schutzplatte mit hoher Steifigkeit auf das Begrenzungsmittel aufgebracht, derart, dass der Schutzraum durch die Schutzplatte geschlossen wird. Es ist hierbei bevorzugt, wenn eine Aushärtung des Verbunds aus der steifen Schutzplatte und dem Klebstoffwulst erfolgt. Hierdurch ist sichergestellt, dass die steife Schutzplatte nicht relativ zu dem Klebstoffwulst während des Laminierens verschoben werden kann. Dadurch kann der durch den Klebstoffwulst und die Schutzplatte gebildete Schutzraum auch unter ungünstigen Bedingungen erhalten bleiben. Das im Inneren des Schutzraums befindliche Bauteil wird dabei gegen die bereits erwähnten Klebstoffe bzw. fließfähigen Materialien geschützt.

Insbesondere ist die Schutzplatte zur mechanischen Betätigung des Bauteils elastisch deformierbar. Die Schutzplatte kann dabei nach Herstellung des gesamten tragbaren Datenträgers erhalten bleiben. Die Betätigung des als Taster oder Schnappscheibe ausgebildeten Bauteils erfolgt dann durch die Schutzplatte hindurch.

In einer anderen Ausgestaltung, die nicht der Erfindung entspricht, wird zur Ausbildung des Schutzraums über das Bauteil eine Klebstofffolie aufgebracht und mit einem Werkzeug unter Temperaturbeaufschlagung umgeformt. Hierbei ist es zweckmäßig, wenn das Werkzeug eine zu der Gestalt des Bauteils korrespondierende Form aufweist, so dass die Klebstofffolie passgenau über das Bauteil aufgebracht werden kann.

Es ist hierbei zweckmäßig, wenn die Klebstofffolie im Bereich des Bauteils zumindest abschnittsweise vor dem Aufbringen auf das auf dem Boden befestigte Bauteil mit einem temperaturbeständigen Material versteift wird. Hierdurch wird die mechanische Stabilität der aufgebauten Schutzkammer gewährleistet. Dabei ist es weiterhin zweckmäßig, wenn die Klebstofffolie auf der dem Bauteil zugewandten Seite mit dem temperaturbeständigen Material versteift wird. Hierdurch wird eine Verklebung des Bauteils mit der Klebstofffolie und damit eine Funktionsbeeinträchtigung verhindert. Dadurch kann eine einwandfreie Betätigung des Bauteils nach Herstellung des tragbaren Datenträgers sichergestellt werden.

Nach der Ausbildung des Schutzraums für das Bauteil ist vorgesehen, die Kunststoffteile des Körpers auf das Halbzeug aufzubringen und insbesondere heiß zu laminieren. Im Gegensatz zum Stand der Technik kann damit die Einbringung des mechanisch empfindlichen Bauteils während der Fertigung des tragbaren Datenträgers aus mehreren Schichten erfolgen, wodurch eine einfachere und effizientere Fertigung gewährleistet ist.

Die Erfindung schafft weiterhin einen tragbaren Datenträger zur Speicherung und/ oder Verarbeitung von Daten, mit einer elektronischen Schaltung, einem Bauteil, insbesondere einer von außerhalb des tragbaren Datenträgers betätigbaren Schalteinrichtung, und einem die elektronische Schaltung und die Schalteinrichtung aufnehmenden Körper, der durch laminierte Kunststoffteile gebildet wird. Der tragbare Datenträger zeichnet sich dadurch aus, dass das Bauteil von einem einen Schutzraum bereitstellenden Begrenzungsmittel umgeben ist, welches während der nachfolgenden Lamination der Kunststoffteile das Einbringen von Klebstoff oder einem anderen fließfähigen Material in den Schutzraum verhindert.

Der erfindungsgemäße tragbare Datenträger, z.B. eine Displaykarte, weist den Vorteil einer einfachen und kostengünstigen Herstellung auf. Insbesondere können empfindliche mechanische Bauteile, wie z.B. Taster in Gestalt von Schnappscheiben, während der Herstellung des Kartenkörpers in diesen integriert werden.

Der Datenträger zeichnet sich in einer Ausgestaltungsvariante dadurch aus, dass das Begrenzungsmittel durch einen das Bauteil umlaufenden und zu dem Bauteil beabstandeten Klebstoffwulst ausgebildet ist. Insbesondere ist der Klebstoffwulst derart auf den Boden aufgebracht, dass dieser unterbrechungsfrei und geschlossen das Bauteil umläuft, wodurch das zu schützende mechanische Bauteil während der Herstellung optimal vor Klebstoff oder fließfähigen Materialien geschützt ist.

Zweckmäßigerweise ist der Klebstoffwulst derart auf den Boden aufgebracht, dass dieser über das von dem Boden abgewandte Ende des Bauteils hinausragt, wobei eine Schutzplatte mit hoher Steifigkeit auf das Begrenzungsmittel derart aufgebracht ist, dass der Schutzraum durch die Schutzplatte geschlossen ist.

In einer anderen Ausgestaltung, die nicht der Erfindung entspricht, ist zur Ausbildung des Schutzraums über das Bauteil eine Klebstofffolie aufgebracht und mit einem Werkzeug unter Temperaturbeaufschlagung umgeformt. Zweckmäßigerweise ist die Klebstofffolie im Bereich des Bauteils mit einem temperaturbeständigen Material versteift. Insbesondere ist die Klebstofffolie auf der dem Bauteil zugewandten Seite mit dem temperaturbeständigen Material versteift.

Die Erfindung wird nachfolgend näher anhand der Figuren beschrieben. Es zeigen:
- Fig. 1: eine erste schematische Querschnittsdarstellung eines erfindungsgemäßen tragbaren Datenträgers gemäß einer ersten Ausgestaltungsvariante, und
- Fig. 2a und 2b: eine schematische Querschnittsdarstellung eines tragbaren Datenträgers, der nicht der Erfindung entspricht, in zwei unterschiedlichen Herstellungsstufen.

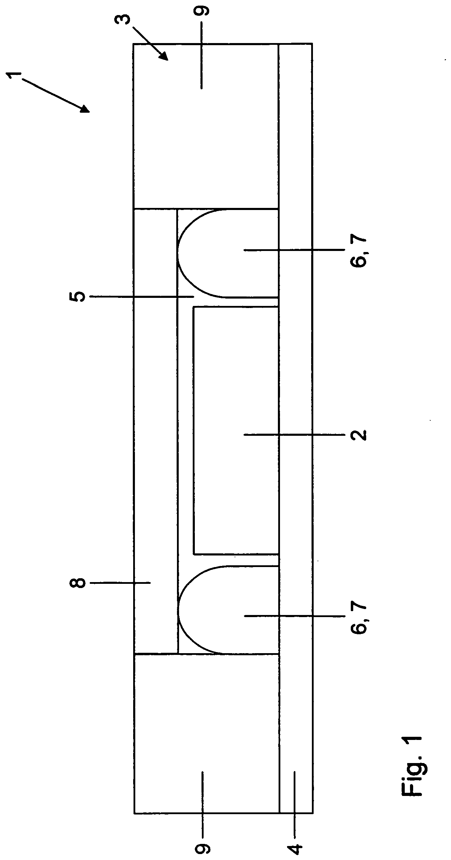

Fig.1 zeigt in einer schematischen Querschnittsdarstellung einen erfindungsgemäßen tragbaren Datenträger 1 gemäß einer ersten Ausführungsvariante. Auf einem Boden 4 ist ein mechanisch empfindliches Bauteil 2 aufgebracht. Der Boden 4 ist Bestandteil eines im Weiteren herzustellenden Körpers 3 des Datenträgers 1. Das Bauteil 2 kann beispielsweise eine von außerhalb des Datenträgers 1 betätigbare Schalteinrichtung darstellen. Insbesondere kann das Bauteil durch eine Schnappscheibe gebildet sein, welche durch Druckaktivierung einen in der Figur nicht näher dargestellten elektronischen Schaltkreis schließt und eine entsprechende Funktionsanwendung auslösen kann.

Um das Bauteil 2 herum und zu diesem beabstandet ist als Begrenzungsmittel 6 ein umlaufender Klebstoffwulst 7 ausgebildet, der das Bauteil 2 unterbrechungsfrei und geschlossen umläuft. Der Klebstoffwulst 7 stellt ein Begrenzungsmittel 6 zur Ausbildung des Schutzraums 5 dar und ist insbesondere durch ein Klebstoffsystem gebildet. Insbesondere kann ein UV-Klebstoff oder ein ein- oder mehrkomponentiges Klebstoffsystem verwendet werden. Der geschlossene Klebstoffwulst kann ringförmig oder kreisförmig um das Bauteil herum ausgebildet sein. Dabei ist der Klebstoffwulst 7 derart auf dem Boden 4 aufgebracht, dass dieser über das von dem Boden abgewandte Ende des Bauteils 2 hinausragt. Auf dem Klebstoffwulst 7 ist eine Schutzplatte mit hoher Steifigkeit aufgebracht, so dass innerhalb des Klebstoffwulstes 7 und der Schutzplatte 8 ein Schutzraum 5 für das auf dem Boden 4 aufgebrachte Bauteil 2 gebildet ist. Zwischen der Schutzplatte 8 und dem Bauteil 2 kann, wie in Fig. 1 schematisch dargestellt, ein Abstand verbleiben. Ebenso kann die Dimensionierung von Klebstoffwulst 7 und Bauteil 2 derart sein, dass die Schutzplatte 8 unmittelbar an das Bauteil 2 grenzt.

Nach dem Aufbringen der Schutzplatte 8 auf dem Klebstoffwulst 7 zur Abschirmung des auf dem Boden 4 aufgebrachten Bauteils 2 erfolgt zweckmäßigerweise ein Aushärteschritt, so dass die Schutzplatte 8 nicht mehr von dem Klebstoffwulst 7 gelöst werden kann und der Schutzraum 5 eine ausreichend hohe Steifigkeit für die nachfolgenden Herstellungsschritte aufweist. Nach der Ausbildung des beschriebenen Schutzraumes 5 für das Bauteil 2 werden ein oder mehrere Kunststoffteile 9 des Körpers 3 des tragbaren Datenträgers 1 auf das beschriebene Halbzeug aufgebracht und laminiert. Dabei ist sichergestellt, dass, bedingt durch die Lamination, kein Klebstoff oder anderes fließfähiges Material in das Innere des Schutzraumes 5 und damit an das Bauteil 2 gelangen kann. Fließfähige Materialien werden durch den Klebstoffwulst 7 gebremst bzw. gestoppt.

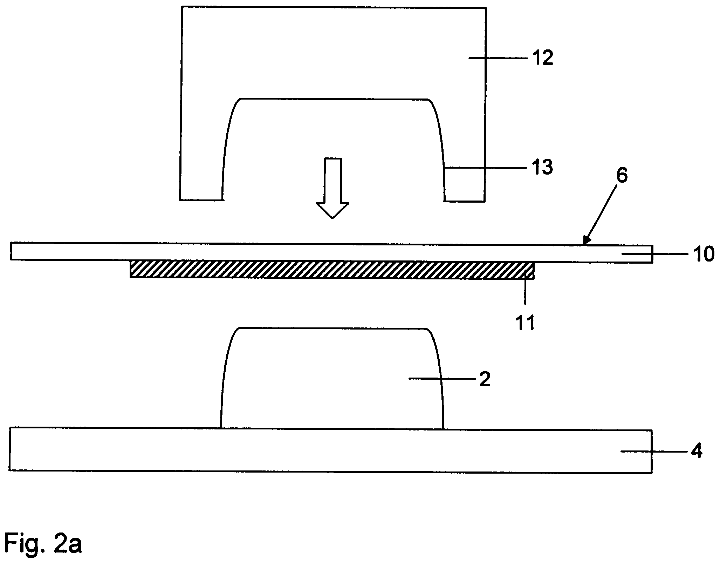

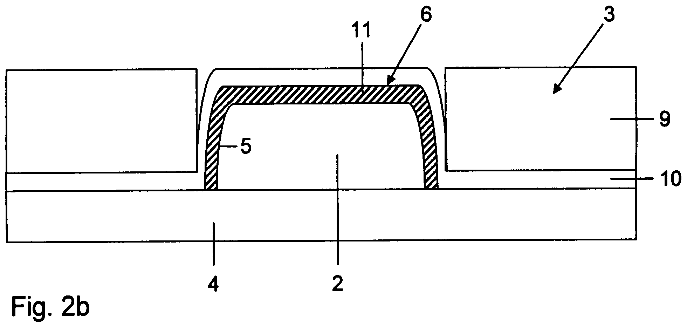

Gemäß einer zweiten Variante, welche in den Fig. 2a und Fig. 2b schematisch in zwei unterschiedlichen Herstellungsstufen dargestellt ist und die nicht der Erfindung entspricht, wird über das
auf dem Boden 4 aufgebrachte mechanisch empfindliche Bauteil 2 eine Klebefolie 10 positioniert, wobei der Boden 4 wiederum Bestandteil eines herzustellenden Körpers 3 des Datenträgers ist. Auf der dem Bauteil 2 zugewandten Seite der Klebefolie 10 ist eine Versteifungsschicht 11 aus einem temperaturbeständigen Material vorgesehen. Diese vorbereitete Klebstofffolie 10 wird über einen Heizstempel 12, der eine an die Gestalt des Bauteils 2 angepasst Aussparung 13 (Negativform) aufweist, über das Bauteil 2 appliziert. Nach dem Aufbringen der Klebstofffolie 10 ist es zweckmäßig, einen Aushärteschritt vorzusehen.

Die als Begrenzungsmittel 6 dienende Versteifungsschicht 11 stellt einen Schutzraum 5 für das Bauteil 2 bereit, durch welchen, wie im vorangegangenen Ausführungsbeispiel, verhindert wird, dass durch weitere Herstellungsschritte des tragbaren Datenträgers Klebstoff oder andere fließfähige Materialien an das oder in den Bereich des Bauteils gelangen und dessen Funktionsfähigkeit beeinflussen.

Während Fig. 2a die Situation schematisch darstellt, bevor die mit der Versteifungsschicht 11 versehene Klebstofffolie 10 über das mechanische Bauteil 2 appliziert wird, zeigt Fig. 2b die Situation nach dem Applizieren der Klebstofffolie 10. Ferner sind die nach Herstellung dieses Halbzeugs aufgebrachte oder aufgebrachten laminierten Kunststoffteile 9 dargestellt, welche in etwa bündig mit dem Bauteil 2 bzw. der darüber aufgebrachten Klebefolie 10 abschließen und zusammen mit dem Boden 4 den Körper 3 ausbilden. Als oberste Schicht des Körpers 3 kann ferner eine (nicht dargestellte) Deckschicht vorgesehen sein.

Das vorgeschlagene Verfahren eignet sich für die Herstellung tragbarer Datenträger, bei denen mechanisch empfindliche Bauteile in den Kartenkörper integriert werden müssen. Hierzu sieht die Erfindung vor, einen Schutzraum um die empfindlichen Bauelemente auszubilden, bevor weitere Kunststoffteile des Körpers des tragbaren Datenträgers auf das vorbereitete Halbzeug aufgebracht und laminiert werden.

## Patentansprüche

1. Verfahren zur Herstellung eines tragbaren Datenträgers (1), der zumindest eine elektronische Schaltung, ein mechanisch empfindliches Bauteil (2), das unter Einwirkung einer mechanischen Kraft eine elektrische Eigenschaft ändert, und einen die elektronische Schaltung und das Bauteil (2) aufnehmenden Körper (3) aufweist, wobei der Körper (3) durch Lamination von Kunststoffteilen (9) hergestellt wird, **dadurch gekennzeichnet, dass**
das Bauteil (2) auf einen Boden (4) des Körpers (3) aufgebracht und um das Bauteil (2) ein abgeschlossener Schutzraum (5) ausgebildet wird, indem um das Bauteil (2) herum beabstandet auf dem Boden (4) ein Begrenzungsmittel (6) aufgebracht und durch eine Schutzplatte (8) mit hoher Steifigkeit abgeschlossen wird, wobei das Begrenzungsmittel (6) über das von dem Boden (4) abgewandte Ende des Bauteils (2) hinausragt und so aufgebracht ist, dass es während der nachfolgenden Lamination der Kunststoffteile (9) das Eindringen von Klebstoff oder einem anderen fließfähigen Material in den Schutzraum (5) verhindert.

2. Verfahren nach Anspruch 1, **dadurch gekennzeichnet, dass** als Bauteil (2) eine von außerhalb des tragbaren Datenträgers (1) betätigbare Schalteinrichtung in dem Schutzraum (5) angeordnet wird.

3. Verfahren nach einem der vorherigen Ansprüche, **dadurch gekennzeichnet, dass** das Begrenzungsmittel (6) durch einen das Bauteil (2) umlaufenden und zu dem Bauteil (2) beabstandeten Klebstoffwulst (7) ausgebildet wird.

4. Verfahren nach Anspruch 3, **dadurch gekennzeichnet, dass** der Klebstoffwulst (7) derart auf den Boden (4) aufgebracht wird, dass dieser unterbrechungsfrei und geschlossen das Bauteil (2) umläuft.

5. Verfahren nach Anspruch 3, **dadurch gekennzeichnet, dass** eine Aushärtung des Verbunds aus der steifen Schutzplatte (8) und dem Klebstoffwulst (7) erfolgt.

6. Verfahren nach Anspruch 1, **dadurch gekennzeichnet, dass** die Schutzplatte (8) zur mechanischen Betätigung des Bauteils (2) elastisch deformierbar ist.

7. Verfahren nach einem der vorherigen Ansprüche, **dadurch gekennzeichnet, dass** nach der Ausbildung des Schutzraums (5) für das Bauteil (2) die Kunststoff teile (9) des Körpers (3) auf ein so gefertigtes Halbzeug aufgebracht und laminiert werden.

8. Tragbarer Datenträger (1) zur Speicherung und/ oder Verarbeitung von Daten, mit einer elektronischen Schaltung, einem Bauteil (2), das unter Einwirkung einer mechanischen Kraft eine elektrische Eigenschaft ändert, insbesondere einer von außerhalb des tragbaren Datenträgers (1) betätigbaren Schalteinrichtung, und einem die elektronische Schaltung und die Schalteinrichtung aufnehmenden Körper (3), der durch laminierte Kunststoffteile (9) gebildet wird, **dadurch gekennzeichnet, dass** um das Bauteil (2) ein abgeschlossener Schutzraum (5) ausgebildet ist, indem um das Bauteil (2) herum und zu diesem beabstandet auf dem Boden (4) ein Begrenzungsmittel (6) aufgebracht und durch eine Schutzplatte (8) mit hoher Steifigkeit abgeschlossen ist, wobei das Begrenzungsmittel (6) über das von dem Boden (4) abgewandte Ende des Bauteils (2) hinausragt und so aufgebracht ist, daß es während der nachfolgenden Lamination der Kunststoffteile (9) das Eindringen von Klebstoff oder einem anderen fließfähigen Material in den Schutzraum (5) verhindert.

9. Datenträgers (1) nach Anspruch 8, **dadurch gekennzeichnet, dass** das Begrenzungsmittel (6) durch einen das Bauteil (2) umlaufenden und zu dem Bauteil (2) beabstandeten Klebstoffwulst (7) ausgebildet ist.

## Claims

1. A method for manufacturing a portable data carrier (1) having at least one electronic circuit, a mechanically sensitive component (2) that changes an electrical property under the action of a mechanical force and a body (3) receiving the electronic circuit and the component (2), wherein the body (3) is manufactured by laminating plastic components (9), **characterized in that**
the component (2) is applied to a bottom (4) of the body (3) and a closed protective space (5) is formed around the component (2) by applying a limiting means (6) to the bottom (4) around the component (2) in spaced-apart fashion and closing by a protective plate (8) with high stiffness, wherein the limiting means (6) projects over the end of the component (2) facing away from the bottom (4) and is applied such that it prevents the penetration of adhesive or other flowable material into the protective space (5) during the subsequent lamination of the plastic components (9).

2. The method according to claim 1, **characterized in that** as component (2) there is arranged in the protective space (5) a switching device actuatable from outside of the portable data carrier (1).

3. The method according to any of the preceding claims, **characterized in that** the limiting means (6) is formed by an adhesive bead (7) extending circumferentially around the component (2) and being spaced apart from the component (2).

4. The method according to claim 3, **characterized in that** the adhesive bead (7) is applied to the bottom (4) such that said bead extends circumferentially around the component (2) in uninterrupted and closed fashion.

5. The method according to claim 3, **characterized in that** a curing is effected of the composite of the stiff protective plate (8) and the adhesive bead (7).

6. The method according to claim 1, **characterized in that** the protective plate (8) is elastically deformable for the mechanical actuation of the component (2).

7. The method according to any of the preceding claims, **characterized in that** after the formation of the protective space (5) for the component (2), the plastic components (9) of the body (3) are applied to a thus produced semi-finished product and laminated.

8. A portable data carrier (1) for storing and/or processing data, with an electronic circuit, a component (2) that changes an electrical property under the action of a mechanical force, in particular a switching device that is actuatable from outside of the portable data carrier (1), and a body (3) receiving the electronic circuit and the switching device, said body being formed by laminated plastic components (9), **characterized in that** there is formed a closed protective space (5) around the component (2) by applying a limiting means (6) to the bottom (4) around the component (2) in spaced-apart fashion and closing by a protective plate (8) with high stiffness, wherein the limiting means (6) projects over the end of the component (2) facing away from the bottom (4) and is applied such that it prevents the penetration of adhesive or other flowable material into the protective space (5) during the subsequent lamination of the plastic components (9).

9. The data carrier (1) according to claim 8, **characterized in that** the limiting means (6) is formed by an adhesive bead (7) extending circumferentially around the component (2) and being spaced apart from the component (2).

## Revendications

1. Procédé de fabrication d'un support de données (1) portable qui comporte au moins un circuit électronique, un composant (2) mécaniquement sensible modifiant une propriété électrique sous l'action d'une force mécanique, et un corps (3) hébergeant le circuit électronique et le composant (2), le corps (3) étant fabriqué par lamination de pièces en matière plastique (9), **caractérisé en ce que**
le composant (2) est placé sur un fond (4) du corps (3) et **en ce que**, autour du composant (2), un espace protégé (5) fermé est réalisé, ce qui a lieu **en ce que**, de manière espacée tout autour du composant (2), sur le fond (4), un moyen de limitation (6) est placé et est fermé par une plaque de protection (8) de haute rigidité, le moyen de limitation (6) dépassant l'extrémité du composant (2) tournée à l'opposé du fond (4) et étant placé de telle manière que, durant la lamination subséquente des pièces en matière plastique (9), il empêche la pénétration de colle ou d'un autre matériau apte à l'écoulement dans l'espace protégé (5).

2. Procédé selon la revendication 1, **caractérisé en ce que**, en tant que composant (2), un dispositif de commutation actionnable depuis l'extérieur du support de données (1) portable est agencé dans l'espace protégé (5).

3. Procédé selon une des revendications précédentes, **caractérisé en ce que** le moyen de limitation (6) est formé par un cordon de colle (7) déposé autour du composant (2) de manière espacée du composant (2).

4. Procédé selon la revendication 3, **caractérisé en ce que** le cordon de colle (7) est placé de telle façon sur le fond (4) qu'il est est déposé sans interruption et de manière fermée autour du composant (2).

5. Procédé selon la revendication 3, **caractérisé en ce qu'**un durcissement du composite formé de la plaque rigide de protection (8) et du cordon de colle (7) a lieu.

6. Procédé selon la revendication 1, **caractérisé en ce que** la plaque de protection (8) est, pour l'actionnement mécanique du composant (2), élastiquement déformable.

7. Procédé selon une des revendications précédentes, **caractérisé en ce que**, après réalisation de l'espace protégé (5) pour le composant (2), les pièces en matière plastique (9) du corps (3) sont placées et laminées sur un semi-fini ainsi usiné.

8. Support de données (1) portable destiné à la mémorisation et/ou au traitement de données, comportant un circuit électronique, un composant (2) modifiant une propriété électrique sous l'action d'une force mécanique, en particulier sous l'effet d'un dispositif de commutation actionnable depuis l'extérieur du support de données (1), et un corps (3) qui héberge le circuit électronique et le dispositif de commutation et qui est constitué par des pièces en matière plastique (9) laminées, **caractérisé en ce que**, autour du composant (2), un espace protégé (5) fermé est réalisé, ce qui a lieu **en ce que**, tout autour du composant (2) et de manière espacée de lui, sur le fond (4), un moyen de limitation (6) est placé et est fermé par une plaque de protection (8) de haute rigidité, le moyen de limitation (6) dépassant l'extrémité du composant (2) tournée à l'opposé du fond (4) et étant placé de telle manière que, durant la lamination subséquente des pièces en matière plastique (9), il empêche la pénétration de colle ou d'un autre matériau apte à l'écoulement dans l'espace protégé (5).

9. Support de données (1) selon la revendication 8, **caractérisé en ce que** le moyen de limitation (6) est formé par un cordon de colle (7) déposé autour du composant (2) de manière espacée du composant (2).
